# EUROPEAN PATENT APPLICATION

(11) **EP 1 575 265 A2**
(43) Date of publication of application: **14.09.2005**
(21) Application number: 05003747.2
(22) Date of filing: 22.02.2005
(51) Int. Cl.: H04N 5/225, H04N 7/18

(54) **Case for a television camera**

(30) Priority: 12.03.2004 IT VI20040048
(71) Applicant: VIDEOTEC S.P.A., 36015 Schio (Vicenza) (IT)
(72) Inventor: Grotto, Alessio, 36015 Schio (Vicenza) (IT)
(74) Representative: Bettello, Pietro

(57) **Abstract**

The finding concerns a case for a television camera, of the type that comprises a tubular central body (2), two bottoms, the front one (3), equipped with the transparent glass pane, and the rear one (4), equipped with the cable fittings and a roof (5). Such a case (1) is characterised in that inside the body (2) a slide can slide and be completely withdrawn, on which the television camera and other accessories, as well as, possibly, at its end, the rear bottom (4) are applied, thus forming an independent slide group.

## Description

The present finding concerns a case for a television camera, according to the general part of claim 1.

It is known that to check areas inside buildings and spaces outside of them, as well as to check industrial processes, so-called "closed circuit television" (CCTV) is often used.

CCTV units clearly comprise at lease one television camera capable of filming the desired area, so as to allow it to be seen by an operator as well as, sometimes, capable of recording the relative images.

In order to protect the television camera from inclement weather, as well as to avoid violent acts against it, both due to vandalism, and to intentionally put the aforementioned television camera out of order, it is placed in a suitable box-shaped case, which carries a glass pane or another transparent element at the front, arranged close to the television camera's lens.

The case for the television camera must of course be supported by a suitable device, generally fixed to a wall or a ceiling, consisting of a plate to be applied to the wall in question, with which a bracket is integral that, at its free end, carries the means suitable for allowing reversible attachment of the case itself.

In the current state of the art, the simplest and most cost-effective embodiment of a case comprises a metal tubular body, preferably made from an extruded piece of aluminium, closed at the two ends by two base plates, preferably made from plastic material, the front one of which contains the transparent wall and the rear one of which is equipped with the fittings for the electrical connections.

Moreover, the case is equipped with a small roof to protect it from atmospheric agents.

The television camera with its power supply and possible other accessories, such as a heater with thermostat and/or ventilator with thermostatic cooling fan, rest and are fixed upon the base of the camera inside the metal body.

Such an embodiment has numerous drawbacks, both constructive and in use.

Indeed, due to the tubular configuration of the central body, the assembly of the various components inside it becomes difficult and requires long assembly times; moreover, said components, once fixed, are difficult for the operator to get to, who must carry out the installation and maintenance operations, such as the replacement of pieces and in particular the adjustment of setup of the television camera: all of this is worsened by the fact that such operations are carried out by him in precarious conditions, for example on top of a ladder or on a temporary scaffolding.

In patent document no. VI2001A000073, to the same Applicant, a case for television cameras of the type with a side opening is described, which is characterised in that the top part has a substantially convex configuration, whereas the bottom part, on which all of the internal components are rested, has a substantially flat configuration.

In such a box it is obviously easier to access the internal components, but it has the drawback of requiring somewhat complex processing to make it, which involves an end cost that is not always suitable for the economic sector for which this type of product is intended.

The purpose of the present finding is that of making a case for television cameras that does not have the drawbacks suffered by similar known products, allowing the assembly/disassembly operations of the internal components and the adjustment operations of the setup of the television camera to be carried out quickly and in conditions of safety for the operator.

A further purpose of the finding is that of making a case for a television camera that is of very low cost, so as to make a product with a high level of technology, which is however competitive with similar technologically "poor" products.

Such purposes are obtained with a case for a television camera of the type that has a closed tubular body, characterised in that it foresees that the internal components, in particular the television camera, are mounted on a base that is removable with respect to the aforementioned body.

The rear bottom closing the body of the case is also applied to the rear end of this base.

The finding is further characterised in that such a removable base is able to slide inside the body, thus taking on the function of a slide, which can be completely removed from the aforementioned body.

The sliding of the slide, equipped at least with the television camera, inside the body, is made easier by the presence of guides or rails formed on the inner part of the body itself, on which corresponding fittings present on the sliding slide engage.

Operatively, access to the television camera is thus made easier by the withdrawal of the internal slide from the body of the case.

The finding is further characterised in that it foresees guides or rails, identical to those present on the inner part of the body, also formed on the covering roof of the body itself.

With such a constructive solution it is thus possible to carry out the sliding and have the positioning of the slide, television camera and bottom group, also on the top part of the case.

Such a possible outer arrangement allows the entire group, as well as being supported integrally by the underlying body and being located in a fixed and precise position, to also and above all be totally accessible.

All of this involves a substantial operating advantage, since the operator shall have a much easier job, being able to act upon an apparatus that is in a fixed position and with precise references, for which reason he can carry out the setup operations of the television camera in conditions of maximum freedom of movement and total personal safety.

Finally, the finding foresees that the covering roof of the case, instead of being a separate element, is in a single piece with the underlying portion of the case itself.

In such a way, the case no longer consists of four distinct pieces, like in current products, but just on three pieces, the central body and two bottoms, with undoubted advantages in construction, in stock management and therefore in the end cost of the product.

Specifically, the roof portion arranged above the body is formed integrally with the extruded piece of aluminium of the body itself.

In the same way, the two roof portions lying over the two side bottoms are formed integrally with the shaped elements, made from plastic material, which constitute the two bottoms themselves.

The finding shall be described in detail hereafter, with reference to one particular embodiment thereof, given as a non-limiting example, with the help of the attached tables of drawings, where:
- fig. 1 (Table I) represents a perspective view of the case according to the finding;
- figs. 2, 3 and 4 represent a front view and two side views of the case according to fig. 1;
- figs. 5 and 6 (Table II) represent a perspective view and a detail of the case, during the sliding of the slide inside the body;
- figs. 7, 8 and 9 (Table III) represent to perspective views and a detail of the case during the sliding of the slide on the roof;
- fig. 10 (Table IV) represents a perspective view of the case with the slide, equipped with a television camera, positioned on the roof.

As can be seen in the figures, the case according to the finding, wholly indicated with reference numeral 1, comprises a tubular central body 2, two bottoms, the front one 3, equipped with the transparent glass pane, and the rear one 4, equipped with the cable fittings and the roof 5, all according to *per se* known ways.

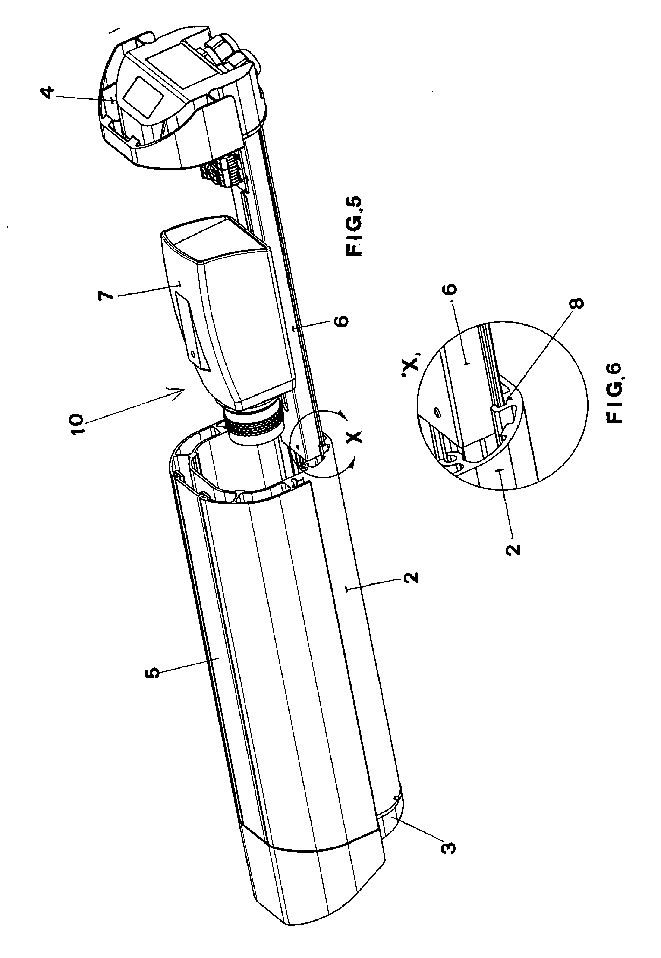

As can be seen in figure 5, inside the body 2 a slide 6 can slide and be completely withdrawn, on which the television camera 7 and possibly other accessories, not represented, as well as, at its end, the rear bottom 4, are applied, forming an independent slide group 10.

As can be seen in figure 6, the slide 6 is kept in line by the interlocking guides 8 formed on the inner part of the body.

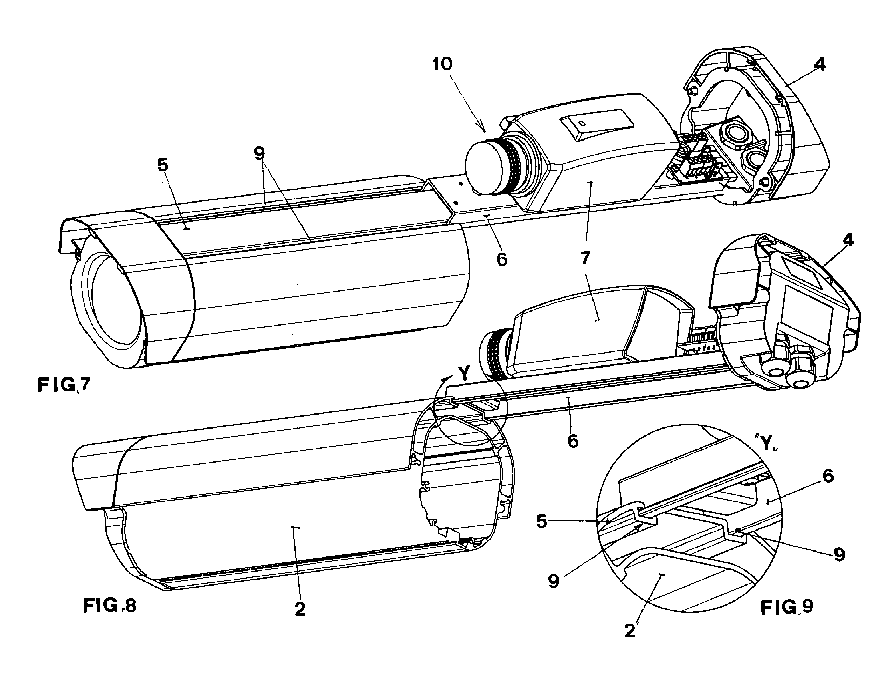

As can be seen in figures 7 to 9, on the top outer part of the case 1 some guides 9 are formed, having the same profile as the guides 8 formed on the inside, for which reason, when the slide group 10 is completely withdrawn, it can slide above the case itself.

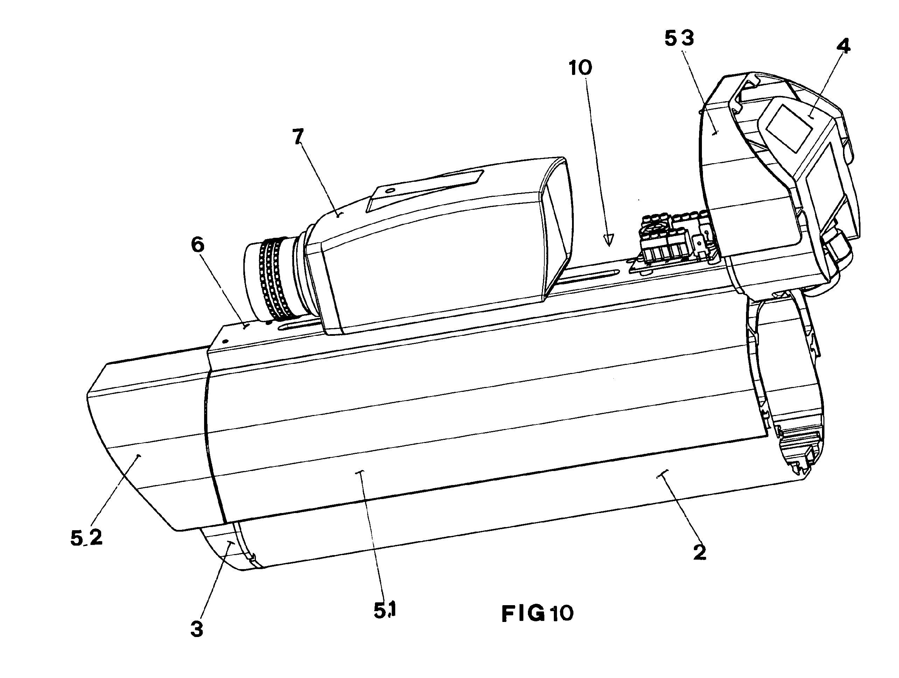

As can easily be worked from the observation of fig. 10, the advantages of such external positioning of the slide group 10 are at least two: the total accessibility and exact positioning, which allow the operator to carry out the setup of the television camera 7 in the best working conditions.

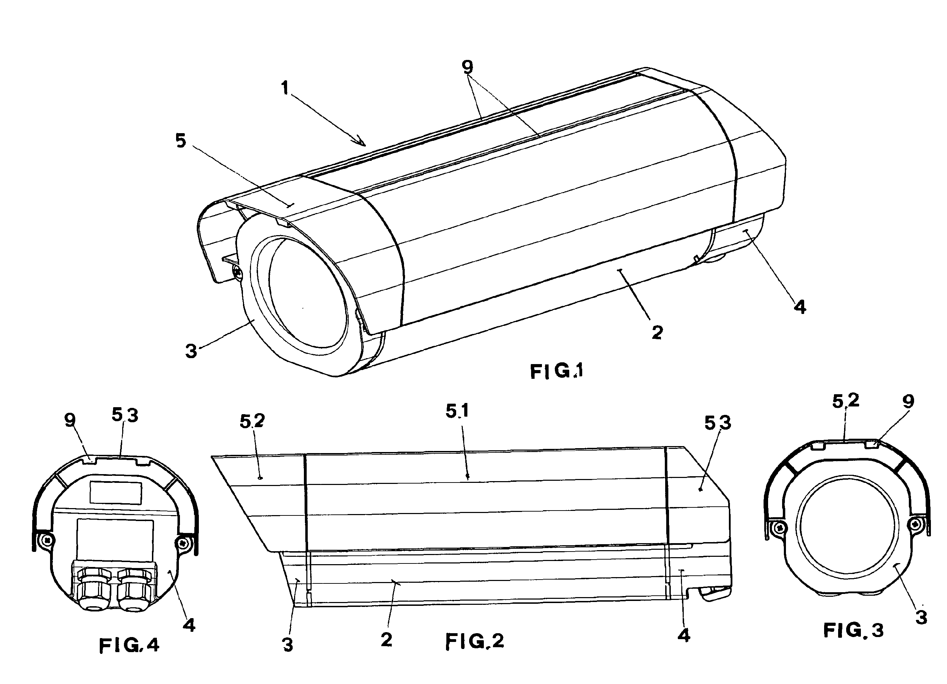

Finally, as can be seen in particular in figures 1 to 4, the roof 5 is made up of three separate portions - a central portion 5.1, integral and in a single piece with the body 2, a front portion 5.2 integral and in a single piece with the front bottom 3 and a rear portion 5.3 integral and in a single piece with the rear bottom 4.

From what has been stated above it can thus be seen how through the device according to the finding, intrinsically simple from the constructive point of view, it is possible to intervene with great ease and safety on the components of the case and in particular on the adjustment of the television camera, in the case in which the user's requirements change.

## Claims

1. CASE FOR A TELEVISION CAMERA, of the type that comprises a tubular central body (2), two bottoms, the front one (3), equipped with the transparent glass pane, and the rear one (4), equipped with the cable fittings and a roof (5), said case (1) being **characterised in that**
inside the body (2) a slide (6) can slide and be completely withdrawn, on which the television camera (7) and other accessories, as well as, possibly, at its end, the rear bottom (4) are applied, thus forming an independent slide group (10).

2. CASE FOR A TELEVISION CAMERA, according to claim 1, **characterised in that** the slide (6) is kept in line by the guides (8) formed on the inner part of the body (2).

3. CASE FOR A TELEVISION CAMERA, according to claim 2, **characterised in that** on the top outer part of the case (1) some guides (9) are formed, having the same profile as the guides (8) formed inside the body (2), for which reason, when the slide group (10) is completely withdrawn from the aforementioned body, it can slide and be exactly positioned above the case itself.

4. CASE FOR A TELEVISION CAMERA, according to one or more of the previous claims, **characterised in that** the roof (5) is made up of three separate portions - a central portion (5.1), integral and in a single piece with the body (2), a front portion (5.2) integral and in a single piece with the front bottom (3) and a rear portion (5.3) integral and in a single piece with the rear bottom (4).
